(19) **Europäisches Patentamt / European Patent Office / Office européen des brevets**

(11) **EP 2 693 628 A1**

(12) # EUROPEAN PATENT APPLICATION
published in accordance with Art. 153(4) EPC

(43) Date of publication:
**05.02.2014 Bulletin 2014/06**

(21) Application number: **11840711.3**

(22) Date of filing: **30.03.2011**

(51) Int Cl.:
**H02P 6/00** (2006.01)    **H02P 21/00** (2006.01)

(86) International application number:
**PCT/CN2011/072316**

(87) International publication number:
**WO 2012/129799 (04.10.2012 Gazette 2012/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Shenzhen Invt Electric Co., Ltd.**
**Shenzhen, Guangdong 518057 (CN)**

(72) Inventors:
• **WANG, Yulei**
**Shenzhen**
**Guangdong 518057 (CN)**

• **XU, Tiezhu**
**Shenzhen**
**Guangdong 518057 (CN)**

(74) Representative: **Herrmann, Uwe et al**
**Lorenz - Seidler - Gossel**
**Widenmayerstrasse 23**
**80538 München (DE)**

(54) **METHOD FOR IDENTIFYING INDUCTANCE PARAMETERS OF SYNCHRONOUS ELECTRIC MACHINE AND REALIZATION SYSTEM THEREOF**

(57)     The present invention discloses an inductance parameter identification method for a synchronous motor and an implementation system thereof, The method includes: determining the position of the rotor magnetic pole axis of the synchronous motor and obtaining direct-quadrature (d-q) axes; injecting a high-frequency voltage or current signal having a predetermined amplitude to the d-axis of the synchronous motor; obtaining the amplitude of a feedback high-frequency current or voltage component that has the same frequency as the injected high-frequency voltage or current of a feedback high-frequency current or voltage at the d-axis; and calculating d-axis inductance $L_d$ according to the amplitude of the feedback high-frequency current or voltage component at the d-axis. The present invention is easy to implement. It imposes no high requirements on the accuracy of the sampling of the feedback current from the synchronous motor. The frequency and amplitude of the high-frequency voltage signal injected to the synchronous motor are easy to control. Moreover, the d-axis inductance and q-axis inductance of the synchronous motor can be directly identified, whether the shaft of the synchronous motor is free or braked, without affecting the accuracy of identification.

**FIG. 2**

**Description**

**FIELD OF THE INVENTION**

The present invention relates to an inductance parameter identification method and an implementation system thereof, and in particular to an inductance parameter identification method for a synchronous motor and an implementation system thereof.

**BACKGROUND OF THE INVENTION**

Due to their advantages including high power density, low losses, high efficiency, high power factor and suitability for direct drive, permanent magnet synchronous motors are increasingly widely applied in the field of electric transmission. In early stages, the synchronous motor generally adopted vector control with encoder feedback, or open-loop voltage/frequency (V/F) control, which remarkably restricted its applications. Currently, speed sensorless vector control techniques for synchronous motors have been developed by a small number of variable-frequency drive manufacturers and employed in the fields such as plastic, machinery, oil wells, fans and water pumps. Generally, speed sensorless vector control is rotor flux linkage (i.e., permanent magnet flux linkage) oriented, and knowledge of the inductance parameter of the synchronous motor is needed to identify the rotor flux linkage of the synchronous motor, which includes direct-axis inductance $L_d$ and quadrature-axis inductance $L_q$. Currently, the direct-axis inductance $L_d$ and quadrature-axis inductance $L_q$ of a synchronous motor are identified using an impulse voltage application method. The method includes the following steps.
1. An arbitrary axis is defined as the d-axis (i.e., magnetic pole axis), and a d-axis voltage is then applied so that the magnetic field of the rotor is aligned to the d-axis.
2. A fixed d-axis voltage impulse is applied to the synchronous motor, the feedback current at the d-axis is sampled, and the d-axis inductance is calculated according to the equation: $i_d = \dfrac{u_d}{r_s}(1 - e^{-\frac{r_s}{L_d}t})$.

3. Fixed q-axis voltage impulses are applied to the synchronous motor for a short period of time, and the feedback current at the q-axis is sampled, and the q-axis inductance is calculated according to the equation:

$$i_q = \frac{u_q}{r_s}(1 - e^{-\frac{r_s}{L_q}t}).$$

The method above has the following disadvantages.
1. The position of the d-axis (rotor magnetic pole axis) of the synchronous motor is obtained by applying a direct current (DC) signal, and in the case where the shaft of the synchronous motor cannot rotate, e.g., in a machine with a brake such as an elevator traction machine, the position of the d-axis of the synchronous motor cannot be obtained.
2. The stator resistance $r_s$ of the synchronous motor needs to be determined first, and the accuracy of the stator resistance $r_s$ will affect the accuracy of the inductance parameter identified.
3. The amplitude of the fixed voltage applied is difficult to determine. A large amplitude of the fixed voltage applied may cause overflow, while a small amplitude of the fixed voltage applied may result in a small current and thus affect the accuracy of detection. Moreover, the period of time for applying the q-axis voltage has to be short; otherwise the synchronous motor may rotate, thus resulting in inaccuracy in the identification of q-axis inductance parameter.
4. The requirements on current sampling are relatively high because of the short period of time for applying the fixed voltage. Current sampling has to be fast and accurate; otherwise errors may be caused in parameter identification.

**SUMMARY OF THE INVENTION**

In view of the disadvantages discussed above of the prior art including detection and calculation difficulties of the direct-axis inductance $L_d$ and quadrature-axis inductance $L_q$ of a synchronous motor, according to the present invention, it is provided an inductance parameter identification method for a synchronous motor and an implementation system thereof, which can statically identify the inductance parameter of the synchronous motor without additional hardware.
The technical solution provided by the present invention to solve the technical problem includes an inductance parameter identification method for a synchronous motor. The method includes: determining a position of a rotor magnetic pole axis of the synchronous motor to obtain a coordinate value of the rotor magnetic pole axis (d-q axes); injecting a high-frequency voltage or current signal having a predetermined amplitude to the d-axis of the synchronous motor; obtaining an amplitude of a feedback high-frequency current or voltage having the same frequency as the injected high-frequency voltage or current signal at the d-axis of the synchronous motor; and calculating an inductance $L_d$ of the d-axis according to the amplitude of the feedback high-frequency current or voltage at the d-axis of the synchronous motor.

According to the present invention, it is also provided a system for implementing the inductance parameter identification method for a synchronous motor above. The system includes an initial magnetic pole locating module, a d-axis high-frequency voltage/current injection module, a d-axis band-pass filter module, and a d-axis inductance calculation module, wherein:

the initial magnetic pole locating module is adapted to determine a position of a rotor magnetic pole axis of the synchronous motor to obtain a coordinate value of the rotor magnetic pole axis (d-q axes);

the d-axis high-frequency voltage/current injection module is adapted to inject a high-frequency voltage or current having a predetermined amplitude to the d-axis of the synchronous motor according to the position of the rotor magnetic pole axis determined by the initial magnetic pole locating module;

the d-axis band-pass filter module is adapted to extract a d-axis component of a feedback high-frequency current or voltage having the same frequency as the injected high-frequency voltage or current signal at the d-axis; and

the d-axis inductance calculation module is adapted to calculate an amplitude of the d-axis component of the feedback high-frequency current or voltage according to the d-axis component, and to calculate an inductance of the d-axis according to the amplitude of the d-axis component.

The technical solution provided by the present invention to solve the technical problem may further include:

the synchronous motor includes Gamma-Delta ($\gamma$-$\delta$) axes and Omega-Kappa ($\lambda$-$\kappa$) axes, and the step of determining the position of the rotor magnetic pole axis of the synchronous motor to obtain the coordinate value of the rotor magnetic pole axis (d-q axes) further may include: injecting a plurality of high-frequency sinusoidal voltage or current signals having an amplitude increasing gradually from zero to the $\gamma$ axis of the $\gamma$-$\delta$ axes chosen at random; obtaining a $\gamma$-axis component and a $\delta$-axis component of the feedback high-frequency current or voltage; performing the $\lambda$-$\kappa$ axes coordinate transformation on the $\gamma$-axis component and the $\delta$-axis component to obtain a magnetic pole position angle $\theta_r$, wherein the $\lambda$-$\kappa$ axes coordinate precedes the $\gamma$-$\delta$ axes coordinate by 45 degrees; and adjusting the $\gamma$-$\delta$ axes coordinate according to the obtained magnetic pole position angle $\theta_r$ so that the $\gamma$-$\delta$ axes coordinate approaches the d-q axes coordinate of the synchronous motor gradually, until the obtained magnetic pole position angle $\theta_r$ reaches a steady state and the $\gamma$-$\delta$ axes coordinate is determined as the d-q axes coordinate.

The step of injecting the plurality of high-frequency sinusoidal voltage or current signals having the amplitude increasing gradually from zero to the $\gamma$-axis of the $\gamma$-$\delta$ axes chosen at random is performed until a $\gamma$-axis amplitude of the feedback high-frequency current or voltage reaches a predetermined value or until the amplitude of the injected high-frequency voltage or current maintains unchanged when the amplitude of the injected high-frequency voltage or current reaches the predetermined value, and the amplitude of the high-frequency voltage or current signal injected to the $\gamma$-axis of the synchronous motor equals to the amplitude of the high-frequency voltage or current signal injected to the d-axis of the synchronous motor for calculating the inductance $L_d$ of the d-axis.

After calculating the inductance $L_d$ of the d-axis, the method may further include calculating an inductance $L_q$ of the q-axis, wherein the step of calculating the inductance $L_q$ of the q-axis includes: injecting the high-frequency voltage or current signal having a predetermined amplitude to the q-axis of the synchronous motor; obtaining the amplitude of the feedback high-frequency current or voltage having the same frequency as the injected high-frequency voltage or current signal at the q-axis of the synchronous motor; and calculating the inductance $L_q$ of the q-axis according to the amplitude of the feedback high-frequency current or voltage at the q-axis of the synchronous motor.

Before the step of calculating the inductance $L_q$ of the q-axis, the inductance parameter identification method may further include:

injecting a direct current (DC) current having a predetermined value to the d-axis;

performing proportional-integral (PI) regulation on the DC current injected to the d-axis and a d-axis DC component of a feedback current from the synchronous motor to obtain a DC voltage of the d-axis;

superimposing the DC voltage of the d-axis upon the sinusoidal high-frequency voltage injected to the q-axis; and

increasing gradually the amplitude of the high-frequency voltage or current injected to the q-axis until the amplitude of the feedback current or voltage reaches the predetermined value, or until the amplitude of the high-frequency voltage or current injected to the q-axis reaches the predetermined value.

The d-axis DC component of the feedback current or voltage from the synchronous motor used in the PI regulation is obtained by using a low-pass filter.

The step of injecting the high-frequency voltage or current signal having the predetermined amplitude to the d-axis of the synchronous motor may include: injecting the high-frequency voltage or current signal to the d-axis of the synchronous motor by a Pulse-width modulation (PWM) module of an inverter, wherein the frequency of the injected high-frequency voltage or current signal is higher than a rated frequency of the synchronous motor, and lower than a PWM carrier frequency of the inverter.

The step of injecting the high-frequency voltage or current signal having the predetermined amplitude to the q-axis of the synchronous motor may include: injecting the high-frequency voltage or current signal to the q-axis of the synchronous motor by a Pulse-width modulation (PWM) module of an inverter, wherein the frequency of the injected high-frequency voltage or current signal is higher than a rated frequency of the synchronous motor, and lower than a PWM carrier frequency of the inverter.

The system may further include a q-axis high-frequency voltage/current injection module, a q-axis band-pass filter module and a q-axis inductance calculation module, wherein:

the q-axis high-frequency voltage/current injection module is adapted to inject a high-frequency voltage or current having a predetermined amplitude to the q-axis of the synchronous motor;

the q-axis band-pass filter module is adapted to extract a q-axis component having the same frequency as the injected voltage or current of a feedback high-frequency current or voltage signal of the q-axis of the synchronous motor; and

the q-axis inductance calculation module is adapted to calculate the amplitude of the q-axis component of the high-frequency feedback current or voltage according to the q-axis component, and calculate q-axis inductance according to the amplitude of the q-axis component.

The system may further include a direct current (DC) proportional-integral (PI) controller module adapted to lock the position of the magnetic pole axis so that the magnetic pole axis does not rotate when a high-frequency voltage or current is injected to the q-axis, through: injecting a DC current having a predetermined value to the d-axis; and performing PI regulation on the DC current and a d-axis DC component of a feedback current or voltage to obtain a d-axis voltage or current, the d-axis voltage output by the DC PI controller module being superimposed upon the high-frequency voltage injected by the q-axis high-frequency voltage injection module.

The PI controller module may obtain the DC component of the feedback current by a current/voltage low-pass filter module.

The system may further include an inverter Space Vector PWM (SVPWM) module, and the d-axis high-frequency voltage/current injection module inputs the injected high-frequency voltage or current to the d-axis of the synchronous motor by the inverter SVPWM module, and the q-axis high-frequency voltage/current injection module inputs the injected high-frequency voltage or current into the q-axis of the synchronous motor by the inverter SVPWM module.

The present invention may bring the following advantages. Accurate identification of the d-axis inductance and q-axis inductance of a synchronous motor can be achieved using a general-purpose frequency-variable device without hardware cost increase. The present invention is easy to implement. It imposes no high requirements on the accuracy of the sampling of the feedback current from the synchronous motor. The frequency and amplitude of the high-frequency voltage signal injected to the synchronous motor are easy to control. Moreover, the d-axis inductance and q-axis inductance of the synchronous motor can be directly identified, whether the shaft of the synchronous motor is free or braked, without affecting the accuracy of identification. By using the present invention, accurate identification of the d-axis inductance and q-axis inductance of surface-mount synchronous motors, embedded synchronous motors and electromagnet synchronous motors can be achieved. In addition, the parameters obtained from identification can be used in vector control algorithms for the synchronous motor.

The present invention will be described hereinafter in detail in conjunction with the accompanying drawings and the embodiments.

**BRIEF DESCRIPTION OF THE DRAWINGS**

Figure 1 illustrates the reference frames used in the present invention and how they are related;

Figure 2 is a block diagram illustrating identification of d-axis inductance according to the present invention; and

Figure 3 is a block diagram illustrating identification of q-axis inductance according to the present invention.

## DETAILED DESCRIPTION OF THE INVENTION

Preferred embodiments of the present invention are described below, and other embodiments with the same or similar principle or basic structure shall all fall within the scope of protection of the present invention.

The present invention includes an inductance parameter identification method for a synchronous motor, and the method includes: determining the position of the rotor magnetic pole axis of the synchronous motor and obtaining direct-quadrature (d-q) axes; injecting a high-frequency voltage or current signal having a predetermined amplitude to the d-axis of the synchronous motor; obtaining the amplitude of a feedback high-frequency current or voltage component that has the same frequency as the injected high-frequency voltage or  current of a feedback high-frequency current or voltage at the d-axis; and calculating d-axis inductance $L_d$ according to the amplitude of the feedback high-frequency current or voltage component at the d-axis. According to the present invention, the step of determining the position of the rotor magnetic pole axis of the synchronous motor and obtaining d-q axes may include: injecting a high-frequency sinusoidal voltage or current signal having an amplitude increasing gradually from 0 to the $\gamma$ axis of an arbitrarily chosen Gamma-Delta ($\gamma$-$\delta$) reference frame of the synchronous motor; obtaining a $\gamma$-axis component and a $\delta$-axis component of a feedback high-frequency current or voltage, and performing Omega-Kappa ($\lambda$-$\kappa$) coordinate transformation on the $\gamma$-axis component and $\delta$-axis component, to obtain a magnetic pole position angle $\theta_r$ in the $\lambda$-$\kappa$ coordinates which, according to an embodiment of the present invention, precede the $\gamma$-$\delta$ coordinates by 45 degrees; and adjusting the $\gamma$-$\delta$ axes according to the obtained magnetic pole position angle $\theta_r$ so that the $\gamma$-$\delta$ axes approach the d-q axes of the synchronous motor, until $\theta_r$ reaches a steady state, which, according to an embodiment of the present invention, means the oscillation of $\theta_r$ stays within a threshold range that is sufficiently small, where the $\gamma$-$\delta$ axes are determined as the d-q axes. According to the present invention, the method may further include calculating q-axis inductance $L_q$ according to the d-q axes of the synchronous motor that are determined, specifically, by: injecting a high-frequency voltage or current signal having a predetermined amplitude to the q-axis of the synchronous motor; obtaining the amplitude of a feedback high-frequency current or voltage component that has the same frequency as the injected high-frequency voltage or current of a feedback high-frequency current or voltage at the q-axis; and calculating the q-axis inductance $L_q$ according to the amplitude of the feedback high-frequency current or voltage component at the q-axis. To make sure that the rotor of the synchronous motor does not rotate when a high-frequency voltage or current signal is injected to the q-axis, a direct current (DC) current may be injected to the d-axis at the same time as the high-frequency voltage or current signal is being injected to the q-axis, which can lock the  position of the rotor magnetic pole, and thus ensure the accuracy of identification of the q-axis inductance.

The basic synchronous motor theory relating to the embodiments of the present invention includes:

In the case where the speed control system is powered by an SVPWM voltage-source inverter, a high-frequency sinusoidal voltage signal having a predetermined amplitude may be applied by the SVPWM module of the inverter directly to the $\gamma$ axis of a $\gamma$-$\delta$ reference frame of the synchronous motor. The $\gamma$-$\delta$ reference frame is an arbitrarily chosen reference frame, and there is a magnetic pole deviation angle $\theta_{re}$ between the $\gamma$-$\delta$ axes and the actual d-axis, i.e., rotor magnetic pole axis, and q-axis of the synchronous motor. Assuming the injected high-frequency voltage has an angular frequency $\omega_i$, and an amplitude $V_i$, then in $\gamma$-$\delta$ coordinates the injected high-frequency voltage signal can be expressed as:

$$u_{s\gamma\omega} = V_i \cos(\omega_i t)$$
$$u_{s\delta\omega} = 0$$

Equation (1)

Generally, the frequency of the injected high-frequency voltage signal is 0.1 KHz to 2 KHz, i.e., higher than the rated frequency of the synchronous motor and lower than the PWM carrier frequency of the inverter. Excited by such a high-frequency signal, the voltage drop across the stator of the synchronous motor can be omitted and the synchronous motor does not rotate; thus there is no counter-electromotive force, and the feedback high-frequency current from the synchronous motor can be expressed as:

$$i_{s\gamma} = \frac{V_i \sin(\omega_1 t)}{\omega_i (L^2 - \Delta L^2)}(L + \Delta L \cos(2\theta_{re}))$$

$$i_{s\delta} = \frac{V_i \sin(\omega_1 t)}{\omega_i (L^2 - \Delta L^2)}(\Delta L \sin(2\theta_{re}))$$

Equation (2)

In Equation (2) above, L = $(L_d + L_q)/$ 2, $\Delta L$ = $(L_q - L_d)/$ 2, and $\theta_{re}$ is the spatial electrical angle between the $\gamma$ axis of the stator and the magnetic pole axis, i.e., d-axis, of the rotor.

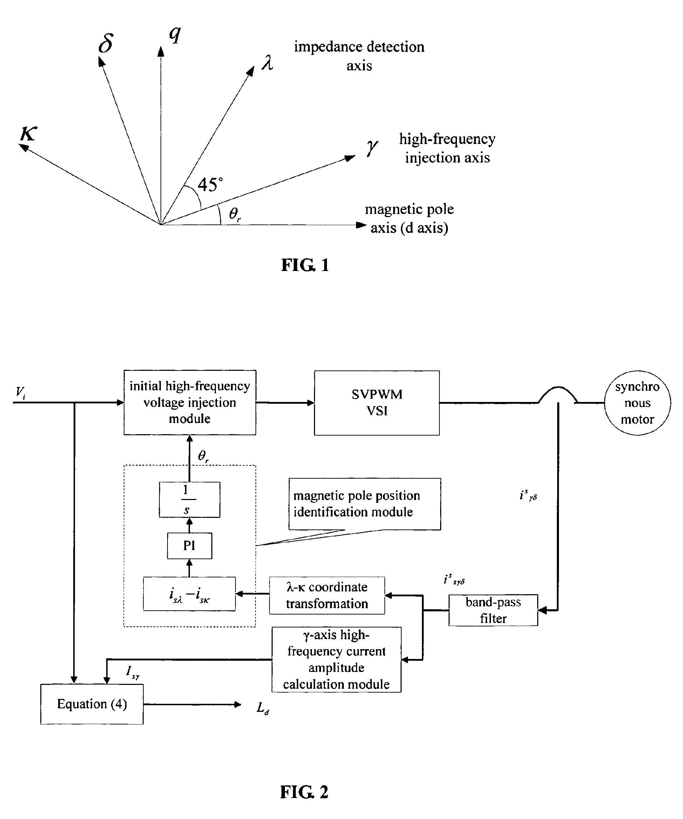

When the deviation angle $\theta_{re}$ of the position of the rotor is zero, high-frequency currents $i_{s\lambda}$, $i_{s\kappa}$ on $\lambda$ axis and $\kappa$ axis which precede the $\gamma$ axis and the $\delta$ axis by 45 degrees are equal, as shown in Figure 1. Therefore, PI control may be performed on the difference between the high-frequency currents $i_{s\lambda}$, $i_{s\kappa}$ on the $\lambda$-axis and the $\kappa$-axis, and the actual position of the magnetic pole of the rotor can be obtained through integral calculation by an integration module, that is:

$$\theta_r = PI(i_{s\kappa} - i_{s\lambda}) * \frac{1}{s} \quad \text{Equation (3)}$$

According to the $\theta_r$ output from Equation (3), the special angle of the $\gamma$-$\delta$ axes may be gradually adjusted, until $\theta_{re}$=0 where the $\gamma$-$\delta$ axes are the d-q axes (or, -d-axis and -q-axis) of the synchronous motor. A high-frequency sinusoidal voltage (having a frequency generally ranging from 0.1 KHz to 2 KHz, i.e., larger than the rated frequency of the synchronous motor and less than the PWM carrier frequency of the inverter) is injected to the d-axis (or, -d-axis) and the q-axis (or, -q-axis), then the d-axis inductance and q-axis inductance can be obtained according to Equation (2):

$$L_d = \frac{V_{id}}{\omega_i I_{sd}}$$

$$L_q = \frac{V_{iq}}{\omega_i I_{sq}}$$

Equation (4)

In Equation (4), $V_{id}$, $V_{iq}$ are the amplitude of the high-frequency voltage injected to the d-axis and the amplitude of the high-frequency voltage injected to the q-axis, respectively, and $I_{sd}$, $I_{sq}$ are the amplitude of the feedback high-frequency current at the d-axis and the amplitude of the feedback high-frequency current at the q-axis respectively.

To make sure that the rotor does not rotate when the high-frequency voltage is injected to the q-axis, a DC current (according to an embodiment of the present invention, the amplitude of the injected Dc current is 20% to 100% of the rated current of the synchronous motor, and generally 30% of the rated current of the synchronous motor) may be injected to the d-axis at the same time as the high-frequency voltage is being injected to the q-axis, to lock the position of the rotor magnetic pole, and thus ensure the accuracy of identification of the q-axis inductance.

For those synchronous motors with no magnetic saliency, a high-frequency current will be generated when a high-frequency voltage is injected to the d-axis, which results in d-axis saturation and leads to magnetic saliency of the synchronous motor; therefore the position of the magnetic pole axis of the synchronous motor can still be obtained according to Equation (3).

A high-frequency voltage injection method for identifying the d-axis inductance and q-axis inductance of a synchronous motor according to the present invention may include the following steps.

1. A $\gamma$-$\delta$ reference frame is arbitrarily chosen according to the Equation $\begin{aligned} u_{s\gamma\omega} &= V_i \cos(\omega_i t) \\ u_{s\delta\omega} &= 0 \end{aligned}$, a high-frequency sinusoidal voltage signal having an amplitude increasing gradually from 0 is injected to the $\gamma$ axis (the whole process of increasing may generally take hundreds of milliseconds to seconds. If the speed of voltage amplitude increasing is too fast, overflow may be caused, which can damage the synchronous motor. The process of the increasing of the voltage amplitude may be set according to actual needs without damaging the synchronous motor), and the feedback current from the synchronous motor is sampled.

2. A $\gamma$-axis component $i_{s\gamma}$ and a $\delta$-axis component $i_{s\delta}$ of the feedback high-frequency current are obtained by sampling with a high-order band-pass filter. In an embodiment of the present invention, the center frequency of the high-order band-pass filter used is $\omega_i$, and the amplitude of $i_{s\gamma}$ can be given by $I_{s\gamma} = \sqrt{i_{s\gamma1}^2 + i_{s\gamma}^2}$ where the variable $i_{s\gamma1}$ is orthogonal to $i_{s\gamma}$.

3. $\lambda$-$\kappa$ coordinate transformation (according to an embodiment of the present invention, the $\lambda$-$\kappa$ coordinates precede the $\gamma$-$\delta$ coordinates by 45 degrees) is performed on the sampled high-frequency currents $i_{s\gamma}$ and $i_{s\delta}$ to obtain $i_{s\kappa}$ and $i_{s\lambda}$, and a magnetic pole position angle $\theta_r$ is obtained according to Equation (3): $\theta_r = PI(i_{s\kappa} - i_{s\lambda}) * \dfrac{1}{s}$.

4. The $\gamma$-$\delta$ axes are gradually adjusted according to the magnetic pole position angle $\theta_r$ obtained in step 3, so that the $\gamma$-$\delta$ axes approach the d-q axes of the synchronous motor.

5. The steps 1 to 4 are repeated until the $\gamma$-axis amplitude of the feedback current, $I_{s\gamma}$, reaches a predetermined value (which in an embodiment may be 20% to 100% of the rated current of the synchronous motor, and generally 1/4 of the rated current of the synchronous motor) or until the amplitude of the injected high-frequency voltage, $V_{id}$, reaches a predetermined value (which in an embodiment may be 20% to 100% of the rated voltage of the synchronous motor, and generally 1/2 of the rated voltage), where the amplitude of the injected high-frequency voltage is maintained unchanged, and then the steps 2 to 4 are repeated until the magnetic pole position angle $\theta_r$ reaches a steady state, where the $\gamma$-$\delta$ axes are the d-q axes. At this point, the amplitude of the q-axis current is small, approximately 0; thus $I_{sd} = I_{s\gamma}$,

$$L_d = \frac{V_{id}}{\omega_i I_{sd}}$$

and the d-axis inductance $L_d$ can be calculated directly according to Equation (4):

$$L_q = \frac{V_{iq}}{\omega_i I_{sq}}$$

6. Since the d-q axes have been obtained, a high-frequency sinusoidal voltage is injected to the q-axis, and in order to make sure that the rotor does not rotate when the high-frequency voltage is injected to the q-axis, a DC current $i_d$ may be injected to the d-axis while the high-frequency voltage is being injected. $i_d$ may be 20% to 100% of the rated current of the synchronous motor, e.g., 30% of the rated current. PI control may be performed on the DC current injected to the d-axis and a DC component of the d-axis feedback current from the synchronous motor. According to an embodiment of the present invention, as an example, PI control is performed on the DC component of the d-axis feedback current from the synchronous motor, $i_d{}^{\wedge}$; and a d-axis DC voltage obtained from the PI control is superimposed upon the high-frequency sinusoidal voltage $u_{sq} = V_{iq}\cos(\omega_i t)$ injected to the q-axis. And the voltage amplitude $V_{iq}$ is gradually increased. (In an embodiment of the present invention, the predetermined value for the amplitude of the injected high-frequency voltage, $V_{iq}$, may be 20% to 100% of the rated voltage of the synchronous motor, and generally may be determined according to the frequency of the injected, such as 1/2 of the rated voltage).

7. A d-axis component $i_{sd}$ and a q-axis component $i_{sq}$ of the feedback high-frequency current are obtained using a band-pass filter, and the amplitude of the q-axis component of the feedback high-frequency current, $i_{sq}$, can be obtained from $I_{sq} = \sqrt{i_{sq1}^2 + i_{sq}^2}$ where the variable $i_{sq1}$ is orthogonal to $i_{sq}$ (i.e., $i_{sq1}$ is preceded by $i_{sq}$ by 90 degrees).

8. DC components $i_d{}^{\wedge}$, $i_q{}^{\wedge}$ of the feedback current from the synchronous motor are obtained by a low-pass filter, to be used by a current loop PI controller.

9. The steps 6 to 8 are repeated until the amplitude of the feedback high-frequency current, $I_{sq}$, reaches a predetermined value (which in an embodiment may be 20% to 100% of the rated current of the synchronous motor, e.g., 1/4 of the rated current of the synchronous motor) or until the amplitude of the injected high-frequency voltage, $V_{iq}$, reaches a predetermined value (which in an embodiment may be 20% to 100% of the rated voltage of the synchronous motor, e.g., 1/2 of the rated voltage). At this point, the amplitude of the d-axis high-frequency current is small, approximately 0; thus the q-axis inductance $L_q$ can be calculated according to Equation (4).

10. The parameter identification process ends.

The embodiment above is a high-frequency voltage injection method for identifying the d-axis inductance and q-axis inductance of a synchronous motor, which includes injecting a high-frequency voltage to the synchronous motor; obtaining a magnetic pole position angle $\theta_r$ in the feedback high-frequency current from the synchronous motor; adjusting

$\gamma$-$\delta$ axes according to the obtained $\theta_r$ so that the $\gamma$-$\delta$ axes approach the d-q axes of the synchronous motor; calculating the d-axis inductance $L_d$; injecting a high-frequency voltage to the q-axis; obtaining a DC component of the feedback current; and calculating the q-axis inductance $L_q$ according to the DC component of the feedback current. Another embodiment of the present invention is a high-frequency current injection method for identifying the d-axis inductance and q-axis inductance of a synchronous motor, in which a high-frequency current is injected to the d-axis and the q-axis, to obtain the d-axis inductance $L_d$ and the q-axis inductance $L_q$. The process is similar to that of the high-frequency voltage injection method, and therefore will be omitted here. It is noted that the high-frequency current injection method may include: performing PI control on a command d/q-axis high-frequency current and the feedback d/q-axis high-frequency current, and inputting a high-frequency voltage from the PI controller to the synchronous motor by a PWM module of an inverter. Generally, the obtained high-frequency voltage is the command high-frequency voltage.

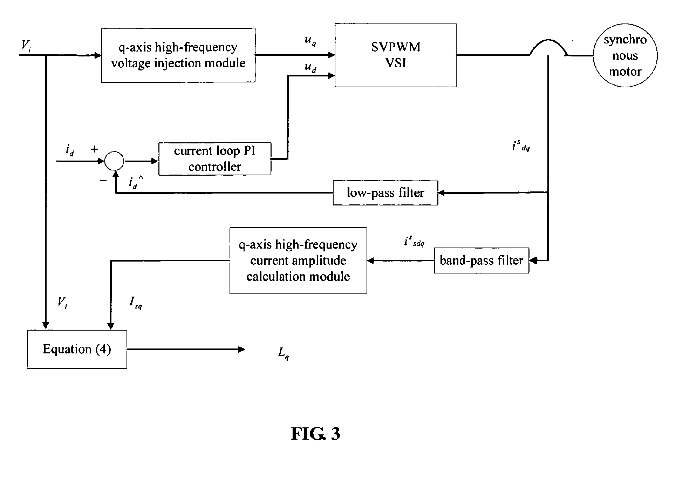

As shown in Figure 2 and Figure 3, according to the present invention, it is also provided a system for implementing the inductance parameter identification method for a synchronous motor above. The system mainly includes: an initial magnetic pole locating module, a d-axis high-frequency voltage/current injection module, an inverter SVPWM module, a d-axis band-pass filter module, and a d-axis inductance calculation module.

In an embodiment of the invention, the initial magnetic pole locating module is adapted mainly to determine the position of the rotor magnetic pole axis of the synchronous motor and obtain the d-axis (magnetic pole axis) and the q-axis of the synchronous motor. According to an embodiment of the invention, the d-axis high-frequency voltage/current injection module may further be adapted to inject a high-frequency sinusoidal voltage or current signal having an amplitude increasing gradually from 0 to the $\gamma$-axis of an arbitrarily chosen $\gamma$-$\delta$ reference frame of the synchronous motor. In Figure 2, the initial high-frequency voltage injection module may represent a d-axis high-frequency voltage injection module, and the magnetic pole position identification module may represent an initial magnetic pole locating module. In the case where a high-frequency voltage is injected to the synchronous motor, the high-frequency voltage is injected to the $\gamma$-axis of the arbitrarily chosen $\gamma$-$\delta$ reference frame of the synchronous motor according to Equation (1):

$$u_{s\gamma\omega} = V_i \cos(\omega_i t)$$
$$u_{s\delta\omega} = 0$$

, where the frequency of the injected is $\omega_i$, and the amplitude is $V_i$. The case where a high-frequency current is injected to the synchronous motor is similar to the case where a high-frequency voltage is injected, and therefore will be omitted here.

The d-axis high-frequency voltage/current injection module inputs the high-frequency voltage or current to be injected to the d-axis of the synchronous motor by the inverter SVPWM module.

The d-axis high-frequency voltage/current injection module is adapted to inject a high-frequency voltage or current having a predetermined amplitude to the d-axis of the synchronous motor according to the position of the magnetic pole axis determined by the initial magnetic pole locating module.

The d-axis band-pass filter module is adapted to extract a d-axis component that has the same frequency as the injected voltage or current of a feedback high-frequency current or voltage at the d-axis .

The d-axis inductance calculation module is adapted to calculate the amplitude of the d-axis component of the high-frequency feedback current or voltage according to the d-axis component, and calculate d-axis inductance according to the amplitude of the d-axis component.

In addition to the main modules above, the system according to the present invention may further include a $\lambda$-$\kappa$ coordinate transformation module adapted to transform the obtained feedback high-frequency current or voltage in $\gamma$-$\delta$ coordinates into an impedance detection reference frame $\lambda$-$\kappa$. According to an embodiment of the present invention, the $\lambda$-$\kappa$ coordinates precede the $\gamma$-$\delta$ coordinates by 45 degrees. The initial magnetic pole locating module is connected to the d-axis band-pass filter module via the $\lambda$-$\kappa$ coordinate transformation module, and obtains a magnetic pole position angle $\theta_r$ from the transformation result from the $\lambda$-$\kappa$ coordinate transformation module, and adjusts the $\gamma$-$\delta$ axes according to the obtained magnetic pole position angle $\theta_r$ so that the $\gamma$-$\delta$ axes approach the d-q axes of the synchronous motor, until $\theta_r$ reaches a steady state, where the $\gamma$-$\delta$ axes are the d-q axes.

The present invention may further include a q-axis inductance $L_q$ calculation part. In an embodiment of the present invention, the q-axis inductance $L_q$ calculation part mainly includes a q-axis high-frequency voltage/current injection module, an inverter SVPWM module, a q-axis band-pass filter module and a q-axis inductance calculation module.

The q-axis high-frequency voltage/current injection module is adapted to inject a high-frequency voltage or current having a predetermined amplitude to the q-axis of the synchronous motor.

The inverter SVPWM module is adapted to input a high-frequency voltage obtained  from superimposing a voltage output by a PI controller module upon the high-frequency voltage or current injected by the q-axis high-frequency voltage/current injection module, to the q-axis of the synchronous motor.

The d-axis band-pass filter module is adapted to extract a q-axis component that has the same frequency as the injected voltage or current of a feedback high-frequency current or voltage of the q-axis; and

the d-axis inductance calculation module is adapted to calculate the amplitude of the q-axis component of the high-frequency feedback current or voltage according to the q-axis component, and calculate q-axis inductance according to the amplitude of the q-axis component.

According to an embodiment of the present invention, a DC PI controller module may also be included (shown as the current loop PI controller in Figure 3), which is adapted to lock the position of the magnetic pole axis so that the magnetic pole axis does not rotate when a high-frequency voltage or current is injected to the q-axis, through: injecting a DC current having a predetermined value to the d-axis; and performing PI control on the DC current injected to the d-axis and a DC component of a d-axis feedback current to obtain a d-axis DC voltage, the d-axis voltage output by the DC PI controller module being superimposed upon the high-frequency voltage injected by the q-axis high-frequency voltage injection module. According to an embodiment of the present invention, the PI controller obtains the DC component of the feedback current by a low-pass filter module.

Accurate identification of the d-axis inductance and q-axis inductance of a synchronous motor can be achieved using a general-purpose frequency-variable device without hardware cost increase. The present invention is easy to implement. It imposes no high requirements on the accuracy of the sampling of the feedback current from the synchronous motor. The frequency and amplitude of the high-frequency voltage signal injected to the synchronous motor are easy to control. Moreover, the d-axis inductance and q-axis inductance of the synchronous motor can be directly identified, whether the shaft of the synchronous motor is free or braked, without affecting the accuracy of identification. By using the present invention, accurate identification of the d-axis inductance and q-axis inductance of surface-mount synchronous motors, embedded synchronous motors and electromagnet synchronous motors can be achieved. In addition, the parameters obtained from identification can be used in vector control algorithms for the synchronous motor.

**Claims**

1. An inductance parameter identification method for a synchronous motor, comprising:

   determining a position of a rotor magnetic pole axis of the synchronous motor to obtain a coordinate value of the rotor magnetic pole axis (d-q axes);
   injecting a high-frequency voltage or current signal having a predetermined amplitude to the d-axis of the synchronous motor;
   obtaining an amplitude of a feedback high-frequency current or voltage signal having the same frequency as the injected high-frequency voltage or current signal at the d-axis of the synchronous motor; and
   calculating an inductance $L_d$ of the d-axis according to the amplitude of the feedback high-frequency current or voltage signal at the d-axis of the synchronous motor.

2. The inductance parameter identification method for the synchronous motor as claimed in claim 1, wherein the synchronous motor comprises Gamma-Delta ($\gamma$-$\delta$) axes and Omega-Kappa ($\lambda$-$\kappa$) axes, and the step of determining the position of the rotor magnetic pole axis of the synchronous motor to obtain the coordinate value of the rotor magnetic pole axis (d-q axes) further comprises:

   injecting a plurality of high-frequency sinusoidal voltage or current signals having an amplitude increasing gradually from zero to the $\gamma$ axis of the $\gamma$-$\delta$ axes chosen at random;
   obtaining a $\gamma$-axis component and a $\delta$-axis component of the feedback high-frequency current or voltage signal;
   performing the $\lambda$-$\kappa$ axes coordinate transformation on the $\gamma$-axis component and the $\delta$-axis component to obtain a magnetic pole position angle $\theta_r$, wherein the $\lambda$-$\kappa$ axes coordinate precedes the $\gamma$-$\delta$ axes coordinate by 45 degrees; and
   adjusting the $\gamma$-$\delta$ axes coordinate according to the obtained magnetic pole position angle $\theta_r$ so that the $\gamma$-$\delta$ axes coordinate approaches the d-q axes coordinate of the synchronous motor gradually, until the obtained magnetic pole position angle $\theta_r$ reaches a steady state and the $\gamma$-$\delta$ axes coordinate is determined as the d-q axes coordinate.

3. The inductance parameter identification method for the synchronous motor as claimed in claim 2, wherein the step of injecting the plurality of high-frequency sinusoidal voltage or current signals having the amplitude increasing gradually from zero to the $\gamma$-axis of the $\gamma$-$\delta$ axes chosen at random is performed until a $\gamma$-axis amplitude of the feedback high-frequency current or voltage signal reaches a predetermined value or until the amplitude of the injected high-frequency voltage or current maintains unchanged when the amplitude of the injected high-frequency voltage or current signal reaches the predetermined value, and the amplitude of the high-frequency voltage or current signal injected to the $\gamma$-axis of the synchronous motor equals to the amplitude of the high-frequency voltage or current signal injected to the d-axis of the synchronous motor for calculating the inductance $L_d$ of the d-axis.

4. The inductance parameter identification method for the synchronous motor as claimed in any one of claims 1-3, further comprises calculating an inductance $L_q$ of the q-axis after calculating the inductance $L_d$ of the d-axis, wherein the step of calculating the inductance $L_q$ of the q-axis comprises:

injecting the high-frequency voltage or current signal having a predetermined amplitude to the q-axis of the synchronous motor;
obtaining the amplitude of the feedback high-frequency current or voltage signal having the same frequency as the injected high-frequency voltage or current signal at the q-axis of the synchronous motor; and
calculating the inductance $L_q$ of the q-axis according to the amplitude of the feedback high-frequency current or voltage signal at the q-axis of the synchronous motor.

5. The inductance parameter identification method for the synchronous motor as claimed in claim 4, wherein before the step of calculating the inductance $L_q$ of the q-axis, the inductance parameter identification method further comprises:

injecting a direct current (DC) current having a predetermined value to the d-axis;
performing proportional-integral (PI) regulation on the DC current injected to the d-axis and a d-axis DC component of a feedback current from the synchronous motor to obtain a DC voltage of the d-axis;
superimposing the DC voltage of the d-axis upon the sinusoidal high-frequency voltage injected to the q-axis; and
increasing gradually the amplitude of the high-frequency voltage or current signal injected to the q-axis until the amplitude of the feedback current or voltage reaches the predetermined value, or until the amplitude of the high-frequency voltage or current signal injected to the q-axis reaches the predetermined value.

6. The inductance parameter identification method for the synchronous motor as claimed in claim 5, wherein the d-axis DC component of the feedback current or voltage from the synchronous motor used in the PI regulation is obtained by using a low-pass filter.

7. The inductance parameter identification method for the synchronous motor as claimed in claim 1, wherein the step of injecting the high-frequency voltage or current signal having the predetermined amplitude to the d-axis of the synchronous motor comprises:

injecting the high-frequency voltage or current signal to the d-axis of the synchronous motor by a Pulse-width modulation (PWM) module of an inverter, wherein the frequency of the injected high-frequency voltage or current signal is higher than a rated frequency of the synchronous motor, and lower than a PWM carrier frequency of the inverter.

8. The inductance parameter identification method for the synchronous motor as claimed in claim 4, wherein the step of injecting the high-frequency voltage or current signal having the predetermined amplitude to the q-axis of the synchronous motor comprises:

injecting the high-frequency voltage or current signal to the q-axis of the synchronous motor by a Pulse-width modulation (PWM) module of an inverter, wherein the frequency of the injected high-frequency voltage or current signal is higher than a rated frequency of the synchronous motor, and lower than a PWM carrier frequency of the inverter.

9. A system for implementing the inductance parameter identification method for the synchronous motor as claimed in claim 1, the system comprises an initial magnetic pole locating module, a d-axis high-frequency voltage/current injection module, a d-axis band-pass filter module, and a d-axis inductance calculation module, wherein:

the initial magnetic pole locating module is adapted to determine a position of a rotor magnetic pole axis of the synchronous motor to obtain a coordinate value of the rotor magnetic pole axis (d-q axes);
the d-axis high-frequency voltage/current injection module is adapted to inject a high-frequency voltage or current signal having a predetermined amplitude to the d-axis of the synchronous motor according to the position of the rotor magnetic pole axis determined by the initial magnetic pole locating module;
the d-axis band-pass filter module is adapted to extract a d-axis component of a feedback high-frequency current or voltage signal having the same frequency as the injected high-frequency voltage or current signal at the d-axis; and

the d-axis inductance calculation module is adapted to calculate an amplitude of the d-axis component of the feedback high-frequency current or voltage signal according to the d-axis component, and to calculate an inductance of the d-axis according to the amplitude of the d-axis component.

10. The system as claimed in claim 9, wherein the d-axis high-frequency voltage/current injection module is further adapted to inject a plurality of high-frequency sinusoidal voltage or current signals having an amplitude increasing gradually from zero to a $\gamma$ axis of a $\gamma$-$\delta$ axes chosen at random when the initial magnetic pole locating module determines the position of the rotor magnetic pole axis of the synchronous motor.

11. The system as claimed in claim 10, wherein the system further comprises a $\lambda$-$\kappa$ axes coordinate transformation module adapted to transform the obtained feedback high-frequency current or voltage at the $\gamma$-$\delta$ axes coordinate into impedance detection $\lambda$-$\kappa$ axes;

the initial magnetic pole locating module connects to the d-axis band-pass filter module via the $\lambda$-$\kappa$ axes coordinate transformation module, obtains a magnetic pole position angle $\theta_r$ from a transformation result of the $\lambda$-$\kappa$ axes coordinate transformation module, adjusts the $\gamma$-$\delta$ axes coordinate according to the obtained magnetic pole position angle $\theta_r$ so that the $\gamma$-$\delta$ axes coordinate approaches the d-q axes coordinate of the synchronous motor gradually, until the obtained magnetic pole position angle $\theta_r$ reaches a steady state, and the $\gamma$-$\delta$ axes coordinate is determined as the d-q axes coordinate.

12. The system as claimed in any one of claims 9-11, wherein the system further comprises a q-axis high-frequency voltage/current injection module, a q-axis band-pass filter module and a q-axis inductance calculation module, wherein:

the q-axis high-frequency voltage/current injection module is adapted to inject a high-frequency voltage or current signal having a predetermined amplitude to the q-axis of the synchronous motor;

the q-axis band-pass filter module is adapted to extract a q-axis component of the feedback high-frequency current or voltage signal having the same frequency as the injected high-frequency voltage or current signal at the q-axis of the synchronous motor; and

the q-axis inductance calculation module is adapted to calculate the amplitude of the q-axis component of the high-frequency feedback current or voltage signal according to the q-axis component, and calculate q-axis inductance according to the amplitude of the q-axis component.

13. The system as claimed in claim 12, wherein the system further comprises a direct current (DC) proportional-integral (PI) controller module adapted to lock the position of the magnetic pole axis so that the magnetic pole axis does not rotate when a high-frequency voltage or current signal is injected to the q-axis, wherein the DC PI controller module is further adapted to inject a DC current signal having a predetermined value to the d-axis and perform PI regulation on the DC current and a d-axis DC component of the feedback current or voltage to obtain a d-axis voltage or current, and the d-axis voltage output by the DC PI controller module is superimposed upon the high-frequency voltage injected by the q-axis high-frequency voltage injection module.

14. The system as claimed in claim 13, wherein the DC PI controller module obtains the DC component of the feedback current by a current/voltage low-pass filter module.

15. The system as claimed in claim 12, wherein the system further comprises an inverter Space Vector PWM (SVPWM) module, and the d-axis high-frequency voltage/current injection module inputs the injected high-frequency voltage or current signal to the d-axis of the synchronous motor by the inverter SVPWM module, and the q-axis high-frequency voltage/current injection module inputs the injected high-frequency voltage or current signal into the q-axis of the synchronous motor by the inverter SVPWM module.

$\delta$ $q$ $\lambda$

impedance detection
axis

$\kappa$

$\gamma$ high-frequency
injection axis

45°

$\theta_r$ magnetic pole
axis (d axis)

**FIG. 1**

$V_i$ → initial high-frequency voltage injection module → SVPWM VSI → synchronous motor

$\theta_r$

$\dfrac{1}{s}$

magnetic pole position identification module

$i^s_{\gamma\delta}$

PI

$i_{s\lambda} - i_{s\kappa}$ ← λ-κ coordinate transformation ← $i^s_{s\gamma\delta}$ band-pass filter

γ-axis high-frequency current amplitude calculation module

$I_{s\gamma}$

Equation (4) → $L_d$

**FIG. 2**

**FIG. 3**

## INTERNATIONAL SEARCH REPORT

| International application No. |
| --- |
| PCT/CN2011/072316 |

**A. CLASSIFICATION OF SUBJECT MATTER**

See extra sheet

According to International Patent Classification (IPC) or to both national classification and IPC

**B. FIELDS SEARCHED**

Minimum documentation searched (classification system followed by classification symbols)

IPC: H02P6, H02P21

Documentation searched other than minimum documentation to the extent that such documents are included in the fields searched

Electronic data base consulted during the international search (name of data base and, where practicable, search terms used)

CNKI, CNABS, CNTXT, WPI, EPODOC, IEEE: d axis, q axis, direct axis, horizontal axis, quadrature axis, parameter

**C. DOCUMENTS CONSIDERED TO BE RELEVANT**

| Category* | Citation of document, with indication, where appropriate, of the relevant passages | Relevant to claim No. |
| --- | --- | --- |
| A | CN 1489822 A (OTIS ELEVATOR CO) 14 Apr. 2004 (14.04.2004) see page 4, line 12 to page 8, line 15 of the description, Figs. 1-5B | 1-15 |
| A | CN 101505130 A (STATE GRID ELECTRIC POWER RES INST et al.) 12 Aug. 2009 (12.08.2009) see the whole document | 1-15 |
| A | JP 2002272195 A (FUJI DENKI TECHNO ENG KK) 20 Sep. 2002 (20.09.2002) see the whole document | 1-15 |

☐ Further documents are listed in the continuation of Box C.  ☒ See patent family annex.

|  |  |
| --- | --- |
| *     Special categories of cited documents:<br><br>"A"  document defining the general state of the art which is not considered to be of particular relevance<br><br>"E"  earlier application or patent but published on or after the international filing date<br><br>"L"  document which may throw doubts on priority claim (S) or which is cited to establish the publication date of another citation or other special reason (as specified)<br><br>"O"  document referring to an oral disclosure, use, exhibition or other means<br><br>"P"  document published prior to the international filing date but later than the priority date claimed | "T"  later document published after the international filing date or priority date and not in conflict with the application but cited to understand the principle or theory underlying the invention<br><br>"X"  document of particular relevance; the claimed invention cannot be considered novel or cannot be considered to involve an inventive step when the document is taken alone<br><br>"Y"  document of particular relevance; the claimed invention cannot be considered to involve an inventive step when the document is combined with one or more other such documents, such combination being obvious to a person skilled in the art<br><br>"&"document member of the same patent family |
| Date of the actual completion of the international search<br><br>29 Jul. 2011 (29.07.2011) | Date of mailing of the international search report<br><br>**12 Jan. 2012 (12.01.2012)** |
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br><br>YANG, Jing<br><br>Telephone No. (86-10)62411875 |

Form PCT/ISA /210 (second sheet) (July 2009)

## INTERNATIONAL SEARCH REPORT
### Information on patent family members

International application No.

PCT/CN2011/072316

| Patent Documents referred in the Report | Publication Date | Patent Family | Publication Date |
|---|---|---|---|
| CN 1489822 A | 14.04.2004 | KR 20030045144 A | 09.06.2003 |
| | | JP 2004514392 T | 13.05.2004 |
| | | ES 2250510 T3 | 16.04.2006 |
| | | WO 0239575 A2 | 16.05.2002 |
| | | EP 1334552 A2 | 13.08.2003 |
| | | US 6492788 B1 | 10.12.2002 |
| | | TW 543278 A | 21.07.2003 |
| | | EP 1334552 B1 | 28.09.2005 |
| | | KR 100763049 B1 | 02.10.2007 |
| | | BR 0115229 A | 28.10.2003 |
| | | DE 60113712 E | 09.02.2006 |
| | | DE 60113712 T2 | 06.07.2006 |
| | | JP 4027227 B2 | 26.12.2007 |
| | | CN 100397772 C | 25.06.2008 |
| CN 101505130 A | 12.08.2009 | NONE | |
| JP 2002272195 A | 20.09.2002 | JP 4670162 B2 | 13.04.2011 |

Form PCT/ISA /210 (patent family annex) (July 2009)

## INTERNATIONAL SEARCH REPORT

International application No.

PCT/CN2011/072316

Continuation of Box A in second sheet:
A. CLASSIFICATION OF SUBJECT MATTER

H02P 6/00 (2006.01) i
H02P 21/00 (2006.01) i

Form PCT/ISA /210 (extra sheet) (July 2009)